# EUROPÄISCHE PATENTSCHRIFT

(11) **EP 1 932 654 B1**
(45) Veröffentlichungstag und Bekanntmachung des Hinweises auf die Patenterteilung: **11.08.2010**
(21) Anmeldenummer: 07023199.8
(22) Anmeldetag: 30.11.2007
(51) Int. Cl.: B29C 73/02, B32B 17/10

(54) **Injektor zum Einbringen von Harz in Schadstellen von Glasscheiben**
Injector for applying resin to damaged spots in glass panes
Injecteur destiné à introduire de la résine dans des dommages de plaques de verre

(30) Priorität: 15.12.2006 DE 102006059801
(43) Veröffentlichungstag der Anmeldung: 18.06.2008
(73) Patentinhaber: Talon Technische Geräte GmbH, 64658 Fürth (DE)
(72) Erfinder: Grassinger, Dirk, 64658 Fürth (DE); Grassinger, Siegfried, 64658 Fürth (DE)
(74) Vertreter: Katscher Habermann Patentanwälte

(56) Entgegenhaltungen:
- US-A- 3 890 053
- US-A- 4 569 808
- US-A- 5 643 609

## Beschreibung

Die Erfindung betrifft einen Injektor zum Einbringen von Harz in Schadstellen von Glasscheiben mit einem hohlzylindrischen Gehäuse mit einem Außengewinde zur Befestigung in einer Haltevorrichtung und mit einem in dem Gehäuse verlagerbaren Förderkolben.

Es ist aus der Praxis bekannt, dass Schadstellen in Glasscheiben, wie sie beispielsweise durch Steinschlag in Windschutzscheiben von Kraftfahrzeugen verursacht werden, durch das vollständige Befüllen mit einem geeigneten Reparaturharz ausgebessert werden können. Um eine mechanisch stabile und transparente Ausbesserung der Schadstelle mit dem Reparaturharz bewirken zu können ist es erforderlich, die Schadstelle wiederholt mit dem Reparaturharz zu benetzen und zwischen den einzelnen Benetzungsvorgänngen einen Unterdruck zu erzeugen, um Luft aus der Schadstelle und gegebenenfalls entstandene Blasen aus dem Reparaturharz entweichen zu lassen. Wenn die Schadstelle vollständig mit dem Reparaturharz befüllt ist und alle Lufteinflüsse abgesaugt sind, kann das Reparaturharz durch Einwirkung von künstlich erzeugter UV-Strahlung ausgehärtet werden.

Um mehrfach wechselnd die Schadstelle mit dem Reparaturharz zu benetzen und anschließend einen Unterdruck zu erzeugen, um gegebenenfalls eingeschlossene Luft anzusaugen, wird ein Injektor mit einem hohlzylindrischen, Gehäuse und mit einem in dem Gehäuse verlagerbaren Förderkolben verwendet. Ein offenes Ende des hohlzylindrischen Gehäuses bildet eine einseitig geöffnete Arbeitskammer, deren andere Seite von der Stirnfläche des verlagerbaren Förderkolbens begrenzt wird. Ein derartiger Injektor gemäß dem Oberbegriff des Anspruchs 1 wird beispielsweise in US 4 569 808 A oder in US 5 643 609 A beschrieben.

Zu Beginn des Reparaturvorgangs wird die Stirnfläche des Förderkolbens durch Herausdrehen des Förderkolbens von dem offenen Ende des hohlzylindrischen Gehäuses in Richtung zur Mitte des Gehäuses hineinbewegt und eine mehrere Millimeter tiefe Arbeitskammer gebildet. In diese Arbeitskammer wird das Reparaturharz eingefüllt. Der Injektor wird unmittelbar über der Schadstelle mittels einer Haltervorrichtung auf der Glasscheibe befestigt. Mittels einer geeigneten Dichtung wird die unmittelbar über der Schadstelle angeordnete Arbeitskammer des Injektors luftdicht an die zu reparierende Glasscheibe angepresst.

Durch Hineindrehen des Förderkolbens wird die Arbeitskammer verkleinert und das darin befindliche Reparaturharz in die Schadstelle hineingepresst, sodass die Schadstelle von dem Reparaturharz benetzt wird. Durch anschließendes Herausdrehen des Förderkolbens wird die Arbeitskammer wieder vergrößert, sodass in der Arbeitskammer ein Unterdruck entsteht und in der Schadstelle oder in dem Reparaturharz eingeschlossene Luft abgesaugt wird. Üblicherweise ist nach drei bis fünf wiederholten Benetzungen der Schadstelle mit Reparaturharz und anschließendem Erzeugen von Unterdruck die Schadstelle vollständig und blasenfrei mit dem Reparaturharz befüllt.

Zum Befestigen des Injektors in der Haltevorrichtung weist das hohlzylindrische Gehäuse des Injektors ein Außengewinde auf, welches in eine daran angepasste Bohrung der Haltevorrichtung mit einem Innengewinde eingeschraubt werden kann, bis das vordere offene Ende des Injektors luftdicht an die Schadstelle der Glasscheibe angepasst wird. Für das wiederholte Benetzen mit Reparaturharz und das anschließende Erzeugen des Unterdrucks muss der Förderkolben jeweils um mehrere Millimeter, vorzugsweise etwa 10 Millimeter in dem Injektor verlagert werden. Da auch der Förderkolben über ein Gewinde mit dem hohlzylindrischen Kolben in Eingriff steht, sind üblicherweise eine große Anzahl von vollständigen Umdrehungen erforderlich, um den Förderkolben aus einer Benetzungsposition in eine Unterdruckposition, beziehungsweise umgekehrt zu verlagern. Der hierfür erforderliche manuelle Aufwand ist erheblich, auch wenn zwischen den einzelnen Arbeitsschritten immer wieder mehrere Minuten abgewartet werden muss, um eine zuverlässige Benetzung, beziehungsweise einen ausreichenden Unterdruck zu erzeugen.

Verschiedene Versuche, die Handhabung eines derartigen Injektors zu vereinfachen, sind bisher gescheitert. Da die Schadstelle an einem beliebigen Ort einer oftmals komplex gekrümmten Windschutzscheibe auftreten kann muss die Anordnung des Injektors relativ zu der Haltevorrichtung, mit welcher der Injektor auf der zu reparierenden Glasscheibe befestigbar ist, in jedem Einzelfall eingestellt und zu diesem Zweck über einem größeren Bereich variabel sein. Aus diesem Grund sind die üblichen Schnellverschlüsse wie beispielsweise ein Bajonettverschluss oder ein Rastverschluss nicht geeignet, da derartige Schnellverschlüsse eine vorgegebene Befestigungsposition des Injektors relativ zu der Haltevorrichtung bedingen.
Auch lässt sich die Steigung des Gewindes nicht beliebig steigern, da bei einer zu großen Steigung der Injektor schnell in der Haltevorrichtung verkantet. Derartige Verzögerungen bei der Anbringung des befüllten Injektors an der Glasscheibe führen jedoch dazu, dass das bereits in die Arbeitskammer eingefüllte Reparaturharz auszuhärten beginnt, so dass die Qualität der Reparatur der Schadstelle beeinträchtigt wird. Zudem muss ein zuverlässiger Eingriff des Injektors mit der Haltevorrichtung hergestellt werden, so dass mindestens mehr als eine vollständige Umdrehung des Injektors erforderlich ist.

Die vorangehend dargelegten Schwierigkeiten bei der Handhabung und Überlegungen zu deren Beseitigung treffen in verstärktem Maße auch auf die Handhabung und Verlagerung des Förderkolbens in dem hohlzylindrischen Gehäuse des Injektors zu. Der Arbeitskolben muss während eines Reparaturvorgangs mehrmals üblicherweise 4 - 5 mal innerhalb des hohlzylindrischen Gehäuses verlagert werden, wobei jeweils ein Arbeitshub von etwa 10 Millimeter erforderlich ist. Da der Förderkolben an der Innenseite des hohlzylindrischen Gehäuses über ein Schraubgewinde mit diesem in Eingriff steht und somit der für das Gewinde nutzbare Durchmesser klein ist sind oftmals viele vollständige Umdrehungen des Förderkolbens erforderlich, um den jeweiligen Arbeitshub des Förderkolbens zu bewirken.

Aufgabe der vorliegenden Erfindung ist es demzufolge einen Injektor der Eingangs genannten Gattung so auszugestalten, dass er schnell und zuverlässig bedienbar ist und andererseits auch bei unterschiedlich gekrümmten Glasscheiben eine zuverlässige Reparatur der Schadstelle ermöglicht.

Diese Aufgabe wird erfindungsgemäß dadurch gelöst, dass das Außengewinde des Gehäuses mehrgängig ist. Bei einem mehrgängigen Gewinde wird bereits bei einer nicht vollständigen Umdrehung an mehreren Stellen innerhalb des Gewindes ein zuverlässiger Eingriff erzeugt. Während bei einem eingängigen Gewinde mindestens ein vollständige Umdrehung notwendig ist, um einen zuverlässigen Eingriff zwischen Innengewinde und Außengewinde herzustellen, genügt bei einem beispielsweise zweigängigen Gewinde bereits eine halbe Umdrehung. Auch kann die Steigung des mehrgängigen Außengewindes größer als bei einem eingängigen Außengewinde vorgegeben werden, ohne dass eine erheblich gestiegene Gefahr eines Verkantens innerhalb des Gewindes zu befürchten wäre. Der Injektor kann deshalb mit wenigen Umdrehungen zuverlässig in der Haltevorrichtung befestigt werden und an seinem vorderen mit der einseitig offenen Arbeitskammer dicht an die Glasscheibe angepresst werden.

Einer anderen Ausgestaltung des Erfindungsgedankens zufolge ist vorgesehen, dass das hohlzylindrische Gehäuse einen radial vorspringenden hohlzylindrischen Griffbereich mit einem Innengewinde aufweist und dass der Förderkolben einen radial vorspringenden Lagerungsabschnitt mit einem Außengewinde aufweist, welches mit dem Innengewinde des Griffbereichs des Gehäuses in Eingriff bringbar ist. Der effektive Durchmesser des Schraubgewindes zur Lagerung des Förderkolbens innerhalb des hohlzylindrischen Gehäuses wird auf dieses Weise erheblich vergrößert und kann gleich oder größer dem effektiven Durchmesser des Außengewindes zur Befestigung in der Haltevorrichtung sein. Bei dem größeren effektiven Gewindedurchmesser kann das Gewinde eine größere Steigung aufweisen, ohne dass ein unerwünschtes Verkannten des Förderkolbens in dem hohlzylindrischen Gehäuse befürchtet werden muss. Mit zunehmender Gewindesteigung reduzieren sich die für den gewünschten Arbeitshub notwendigen Umdrehungen des Förderkolbens. Die Handhabung des Injektors während der mehrfach wechselnden Arbeitsschritte wir dadurch erleichtert.

Vorzugsweise ist vorgesehen, dass das Außengewinde des Lagerungsabschnitts ebenfalls mehrgängig ist.

Gemäß einer vorteilhaften Ausgestaltung des Erfindungsgedankens ist vorgesehen, dass das Außengewinde des Gehäuses und/oder das Außengewinde des Lagerungsabschnitts dreigängig ist. Es hat sich gezeigt, dass ein dreigängiges Gewinde bereits nach einer halben Umdrehung des hohlzylindrischen Gehäuses in der Haltevorrichtung, beziehungsweise des Förderkolbens in dem hohlzylindrischen Gehäuse einen sicheren und mechanisch belastbaren Eingriff bewirkt. Bei einer geeigneten Ausgestaltung der jeweils verwendeten Gewinde kann bereits eine halbe Umdrehung ausreichen, um die Befestigung des Injektors in der Haltevorrichtung und einschließlich des dichten Anpressens auf der Glasscheibe, beziehungsweise die Verlagerung des Förderkolbens innerhalb des hohlzylindrischen Gehäuses um den gewünschten Arbeitshub bewirken zu können.

Einer Ausgestaltung des Erfindungsgedankens zufolge ist vorgesehen, dass das Außengewinde des Gehäuses und/oder das Außengewinde des Lagerungsabschnitts eine Steigung von mehr als 1,3, vorzugsweise von 2,5 aufweist. Es hat sich gezeigt, dass bei den üblichen Abmessungen derartiger Injektoren, unter anderem auch durch das nutzbare Volumen der Arbeitskammer vorgegeben werden, und den dadurch bedingten effektiven Durchmessern für das Außengewinde des Gehäuses, beziehungsweise für das Außengewinde des Lagerungsabschnitts Steigungen von 1,3 oder mehr bis über 2,5 hinaus möglich sind, ohne dass das Risiko eines unbeabsichtigten Verkantens während des Schraubvorgangs übermäßig ansteigt.

Vorzugsweise ist vorgesehen, dass das hohlzylindrische Gehäuse und der Förderkolben jeweils einen Griffbereich mit einem übereinstimmenden Außendurchmesser aufweisen. Da keiner der beiden Griffbereiche einen deutlich geringeren Durchmesser aufweist wird die Handhabung des Injektors zusätzliche erleichtert. Beim Befestigen des Injektors in der Haltevorrichtung muss eine Relativverdrehung des hohlzylindrischen Gehäuses relativ zu dem Förderkolben vermieden werden, um ein unbeabsichtigtes Rausbringen des in der Arbeitskammer befindlichen Reparaturharzes zu vermeiden. Dies kann in einfacher Weise dadurch geschehen, dass ein Benutzer die beiden Griffbereiche gleichzeitig, beziehungsweise mit den Fingern übergreifend beide Griffbereiche erfasst und den Injektor betätigen. Während der anschließenden wiederholten Benetzung der Schadstelle mit dem Reparaturharz und dem darauf folgenden Erzeugen eines Unterdrucks muss dagegen das hohlzylindrische Gehäuse relativ zu der Haltevorrichtung fixiert bleiben, während der Förderkolben relativ zu dem hohlzylindrischen Gehäuse verlagert wird. Wären die Durchmesser der beiden Griffbereiche merklich unterschiedlich, so wäre ein zuverlässiges Ergreifen, beziehungsweise Betätigen des deutlich kleineren Griffbereichs insbesondere dann erschwert, wenn der Förderkolben weit in das hohlzylindrische Gehäuse eindringt und die beiden Griffbereiche unmittelbar benachbart sind.

Einer vorteilhaften Ausgestaltung des Erfindergedankens zufolge ist vorgesehen, dass der Förderkolben einen Indikator für einen vorgebbaren Arbeitshub für des Förderkolbens zum Einbringen des Harzes, beziehungsweise zum Erzeugen des Unterdrucks aufweist. Der Indikator kann beispielsweise ein den Arbeitshub begrenzender Anschlag sein. Auch ist denkbar, dass ein beim Herausdrehen des Förderkolbens sichtbar werdende Gewindeabschnitts einen solchen Indikator darstellt. Ebenso ist denkbar, dass Markierungen wie beispielsweise farbige Ringe oder Flächen, beziehungsweise sichtbare und/oder fühlbare Nuten oder Erhebungen geeignete Indikatoren sein können.

Nachfolgend wird ein Ausführungsbeispiel der Erfindung näher erläutert, welches in der Zeichnung dargestellt ist. Es zeigt:
Figur 1 eine teilweise angeschnittene Darstellung eines aus der Praxis bekannten Injektors gemäß dem bereits bekannten Stand der Technik,
Figur 2 ein hohlzylindrisches Gehäuse eines erfindungsgemäßen Injektors,
Figur 3 einen Förderkolben des erfindungsgemäßen Injektors und
Figur 4 eine teilweise angeschnittene Seitenansicht eines mittels einer Haltevorrichtung auf einer Glasscheibe angepressten Injektors mit einem teilweise herausgedrehten Förderkolben.

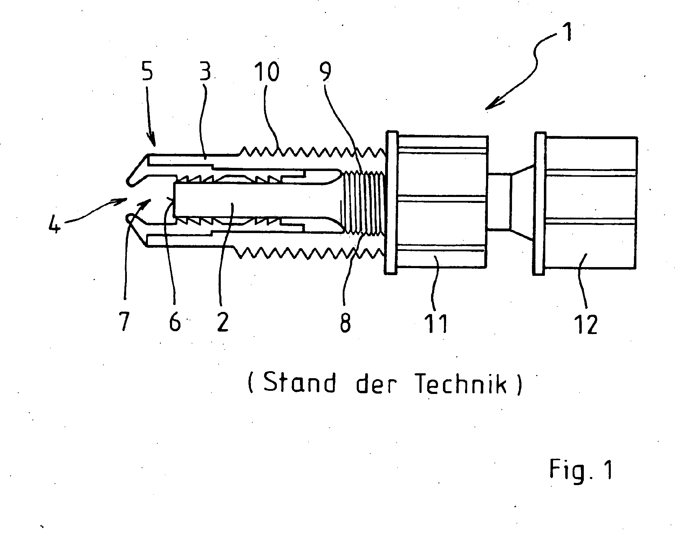

Bei dem in Figur 1 dargestellten Injektor 1 gemäß dem bekannten Stand der Technik ist ein Förderkolben 2 in einem hohlzylindrischen Gehäuse 3 verlagerbar. Im Bereich eines offenen Endes 4 wird durch einen Endabschnitt des hohlzylindrischen Gehäuses 3 und eine Stirnfläche 6 des Förderkolbens 2 eine Arbeitskammer 7 zur Aufnahme eines geeigneten Reparaturharzes gebildet und begrenzt.

Der Förderkolben 2 weist ein Außengewinde 8 auf, welches mit einem daher angepassten Innengewinde 9 des hohlzylindrischen Gehäuses in Eingriff steht. Durch ein Verdrehen des Förderkolbens 2 relativ zu dem hohlzylindrischen Gehäuse 3 wird eine Verlagerung des Förderkolbens 2 und eine entsprechende Volumenänderung der Arbeitskammer 7 bewirkt.

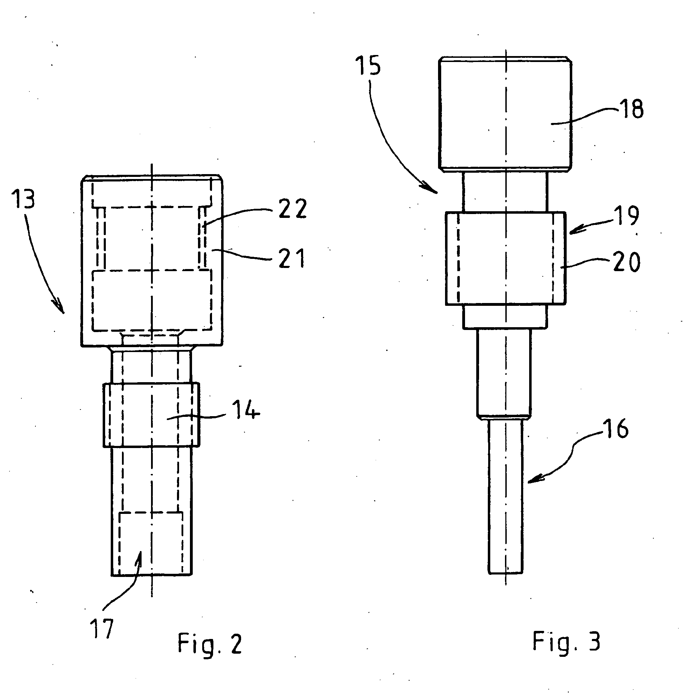

Das hohlzylindrische Gehäuse 3 weist ein Außengewinde 10 zur Befestigung in einer in Figur 1 nicht dargestellten Haltevorrichtung dar. Sowohl das hohlzylindrische Gehäuse 3 als auch der Förderkolben 2 weisen jeweils an ihrem der Arbeitskammer 7 entgegen gesetzten Ende einen Griffbereich 11, 12 auf. Die Befestigung und Relativanordnung des hohlzylindrischen Gehäuses 3 in der und relativ zu der Haltevorrichtung und jede Verlagerung des Förderkolbens 2 relativ zu dem hohlzylindrischen Gehäuse 3 erfordert eine große Anzahl von vollständigen Umdrehungen des hohlzylindrischen Gehäuses 3, beziehungsweise des Förderkolbens 2. Der damit verbundene Aufwand während der Durchführung des Reparaturverfahrens ist erheblich. In Figur 2 wird ein erfindungsgemäß ausgestaltetes hohlzylindrisches Gehäuse 13 dargestellt. Das hohlzylindrische Gehäuse 13 weist in einem mittleren Abschnitt ein dreigängiges Gewinde mit einer Steigung von 1,3 auf. Das dreigängige Gewinde ermöglicht es bei einer Steigung von 1,3, das mit wenigen halben Umdrehungen des hohlzylindrischen Gehäuses 13 eine zuverlässige Befestigung des hohlzylindrischen Gehäuses 13 in einer Haltevorrichtung und ein zuverlässiges, luftdicht abgeschlossenes Anpressen des hohlzylindrischen Gehäuses auf einer Glasscheibe im Bereich der Schadstelle erfolgen kann. Im Einzelfall kann bereits eine einzige halbe Umdrehung des hohlzylindrischen Gehäuses ausreichen, um den Injektor an der vorgesehenen Stelle an der Glasscheibe festzulegen. Eine halbe Umdrehung des Injektors kann von einem Benutzer ohne Umgreifen, beziehungsweise ein erneutes Ergreifen und Verdrehen des Injektors erfolgen.

Ein in Figur 3 dargestellter Förderkolben 15 weist in einem vorderen Verdrängungsabschnitt 16 einen Außendurchmesser auf, der an den Innendurchmesser des hohlzylindrischen Gehäuses 13 im Bereich einer Arbeitskammer 17 angepasst ist. Der Förderkolben 15 weist benachbart zu einem äußeren Ende mit einem Griffbereich 18 einen radial vorspringenden Lagerungsabschnitt 19 mit einem Aßengewinde 20 auf. Das Außengewinde 20 kann zweigängig oder dreigängig sein und weist eine Steigung von 2,5 auf.

Das hohlzylindrische Gehäuse 13 weist an seinem der Arbeitskammer 17 entgegen gesetzten Ende einen ebenfalls radial vorspringenden Griffbereich 21 auf. Der Außendurchmesser des Griffbereichs 21 des hohlzylindrischen Gehäuses 13 stimmt mit dem Außendurchmesser des Griffbereichs 18 des Förderkolbens 15 überein.

Der Griffbereich 21 des hohlzylindrischen Gehäuses 13 ist ebenfalls hohlzylindrisch ausgeführt und weist ein Innengewinde 22 auf, welches an das Außengewinde 20 des Förderkolbens 15 angepasst ist und mit diesem in Eingriff bringbar ist. Der effektive Durchmesser des Außengewindes 20 ist in dem dargestellten Ausführungsbeispiel größer als der effektive Durchmesser des Außengewindes 14 des hohlzylindrischen Gehäuses. Es ist jedoch auch denkbar, dass das Außengewinde 14 des hohlzylindrischen Gehäuses 13 einen größeren effektiven Durchmesser als das Außengewinde 20 des Förderkolbens 15 aufweist.

Auch das Außengewinde 20 des Förderkolbens 15 sowie das daran angepasste Innengewinde 22 des hohlzylindrischen Gehäuses 13 sind mehrgängig ausgestaltet und weisen eine Steigung von 2,5 auf. Auf diese Weise kann ein in den meisten Fällen ausreichender Arbeitshub des Förderkolbens 15 relativ zu dem hohlzylindrischen Gehäuse 13 von mehreren Millimetern bereits durch eine halbe Umdrehung des Förderkolbens 15 relativ zu dem hohlzylindrischen Gehäuse 13 bewirkt werden. Die Handhabung des Injektors während des Reparaturvorgangs mit der mehrfachen Benetzung der Schadstelle mit Reparaturharz und dem anschließenden Erzeugen eines Unterdrucks wird dadurch erleichtert und zuverlässiger.

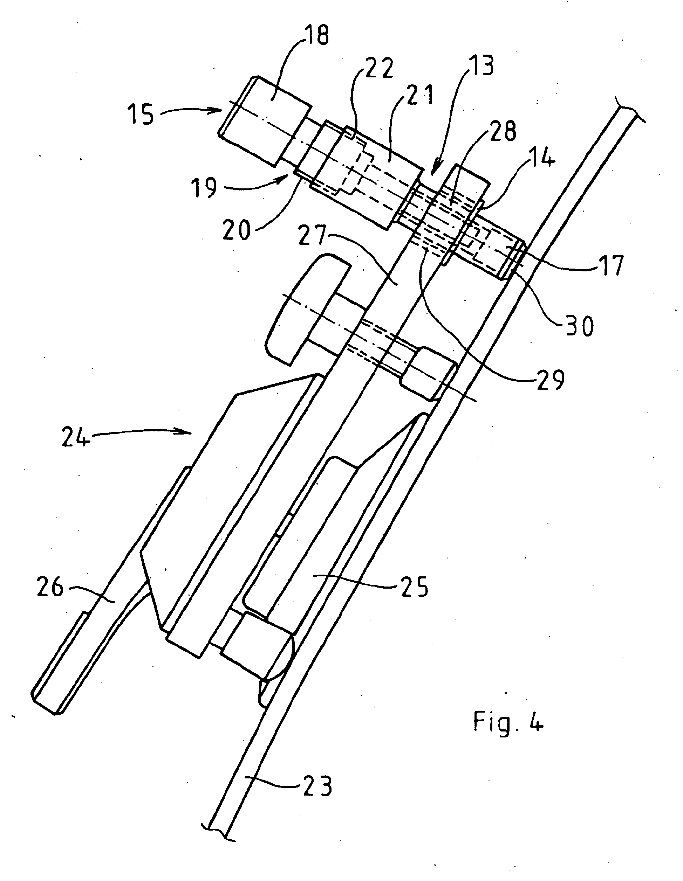

In Figur 4 ist zur Verdeutlichung eine auf einer gewölbten Glasscheibe 23 befestigter Haltevorrichtung 24 dargestellt. Die Haltevorrichtung 24 weist einen Saugnapf 25 auf, der mittels eines Schwenkhebels 26 betätigt, beziehungsweise auf der Glasscheibe 23 festgelegt werden kann. Die Haltevorrichtung 24 weist eine näherungsweise parallel zu der Glasscheibe 23 ausgerichtete Befestigungsscheibe 27 auf, die im Abstand zu dem Saugnapf 25 eine Bohrung 28 mit einem Innengewinde 29 aufweist. Das Innengewinde 29 ist an das Außengewinde 14 des hohlzylindrischen Gehäuses 13 angepasst. Das hohlzylindrische Gehäuse 13 mit dem darin angeordneten Förderkolben 15 sind in der Bohrung 28 verschraubt, sodass die Arbeitskammer 17 eng an der Glasscheibe 23 anliegt und mittels einer Dichtung 30 luftdicht abgeschlossen ist. Da abhängig von der jeweiligen Glasscheibe, die oftmals eine komplexe Wölbung aufweist und abhängig von der jeweiligen Positionen der Schadstelle innerhalb der Glasscheibe ein unterschiedlicher Abstand zwischen der Bohrung 28 der Befestigungsscheibe 27 zu dem darunter befindlichen Bereich der Glasscheibe 23 besteht, muss das hohlzylindrische Gehäuse relativ zu der Befestigungsscheibe 27 innerhalb eines ausreichend großen Bereichs verlagert werden können und an der im jeweiligen Einzelfall gewünschten Position festlegbar sein. Dies wird durch das mehrgängige Gewinde in einfacher Weise ermöglicht.

Der Förderkolben 15 ist in einer teilweise herausgedrehten Stellung relativ zu dem hohlzylindrischen Gehäuse 13 dargestellt. Bereits eine halbe Umdrehung des Förderkolbens 15 ist in vielen Fällen ausreichend, um den Förderkolben 15 um den erforderlichen Arbeitshub zwischen einer Benetzungsposition und einer herausgedrehten Position zum Erzeugen eines Unterdrucks zu verlagern.

Sowohl der Förderkolben 15 als auch das hohlzylindrische Gehäuse 13 können einstöckig aus Kunststoff ausgeführt sein. Der Griffbereich 21 des hohlzylindrischen Gehäuses 13 sowie der Griffbereich 18 des Förderkolbens 15 können mehrere axiale Erhebungen oder Ausnehmungen aufweisen, um ein zuverlässiges Ergreifen und Betätigen des hohlzylindrischen Gehäuses 13, beziehungsweise des Förderkolbens 15 zu erleichtern.

## Patentansprüche

1. Injektor zum Einbringen von Harz in Schadstellen von Glasscheiben mit einem hohlzylindrischen Gehäuse mit einem Außengewinde zur Befestigung in einer Haltevorrichtung und mit einem in dem Gehäuse verlagerbaren Förderkolben, **dadurch gekennzeichnet, dass** das Außengewinde (14) des hohlzylindrischen Gehäuses (13) mehrgängig ist.

2. Injektor nach Anspruch 1, **dadurch gekennzeichnet, dass** das hohlzylindrische Gehäuse (13) einen radial vorspringenden Griffbereich (21) mit einem Innengewinde (22) aufweist und dass der Förderkolben (15) einen radial vorspringenden Lagerungsabschnitt (19) mit einem Außengewinde (20) aufweist, welches mit dem Innengewinde (22) des Griffbereichs (21) des hohlzylindrischen Gehäuses (13) in Eingriff bringbar ist.

3. Injektor nach Anspruch 2, **dadurch gekennzeichnet, dass** das Außengewinde (20) des Lagerungsabschnitts (19) mehrgängig ist.

4. Injektor nach einem der Ansprüche 1 bis 3 **dadurch gekennzeichnet, dass** das Außengewinde (14) des hohlzylindrischen Gehäuses (13) und/oder das Außengewinde (20) des Lagerungsabschnitt (19) dreigängig ist.

5. Injektor nach einem der vorangehenden Ansprüche, **dadurch gekennzeichnet, dass** das Außengewinde (14) des hohlzylindrischen Gehäuses (13) und/oder das Außengewinde (20) des Lagerungsabschnitts (19) eine Steigung von 1,3 oder mehr, vorzugsweise von 2,5 aufweist.

6. Injektor nach einem der vorangegangenen Ansprüche, **dadurch gekennzeichnet, dass** das hohlzylindrische Gehäuse (13) und der Förderkolben (15) jeweils einen Griffbereich (18, 21) mit einem übereinstimmenden Außendurchmesser aufweisen.

7. Injektor nach einem der vorangegangenen Ansprüche, **dadurch gekennzeichnet, dass** der Förderkolben (15) einen Indikator für einen vorgebbaren Arbeitshub des Förderkolbens (15) zum Einbringen des Harzes, beziehungsweise zur Erzeugung des Unterdrucks aufweist.

## Claims

1. Injector for applying resin to damaged areas of glass panes, comprising a hollow-cylindrical housing with an external screw thread for fastening in a holding device and with a conveying piston that is displaceable in the housing, **characterized in that** the external screw thread (14) of the hollow-cylindrical housing (13) has multiple threads.

2. Injector according to Claim 1, **characterized in that** the hollow-cylindrical housing (13) has a radially protruding grip region (21) with an internal screw thread (22), and **in that** the conveying piston (15) has a radially protruding mounting portion (19) with an external screw thread (20) that can be brought into engagement with the internal screw thread (22) of the grip region (21) of the hollow-cylindrical housing (13).

3. Injector according to Claim 2, **characterized in that** the external screw thread (20) of the mounting portion (19) has multiple threads.

4. Injector according to one of Claims 1 to 3, **characterized in that** the external screw thread (14) of the hollow-cylindrical housing (13) and/or the external screw thread (20) of the mounting portion (19) has three threads.

5. Injector according to one of the preceding claims, **characterized in that** the external screw thread (14) of the hollow-cylindrical housing (13) and/or the external screw thread (20) of the mounting portion (19) has a pitch of 1.3 or more, preferably of 2.5.

6. Injector according to one of the preceding claims, **characterized in that** the hollow-cylindrical housing (13) and the conveying piston (15) each have a grip region (18, 21) with matching outside diameters.

7. Injector according to one of the preceding claims, **characterized in that** the conveying piston (15) has an indicator for a predefinable working stroke of the conveying piston (15) for applying the resin, or for producing the reduced pressure.

## Revendications

1. Injecteur destiné à introduire de la résine dans des dommages de plaques de verre, avec un boîtier cylindrique creux présentant un filet extérieur pour la fixation dans un dispositif de support et avec un piston de refoulement déplaçable dans le boîtier, **caractérisé en ce que** le filet extérieur (14) du boîtier cylindrique creux (13) est à plusieurs entrées.

2. Injecteur selon la revendication 1, **caractérisé en ce que** le boîtier cylindrique creux (13) présente une zone de saisie radialement saillante (21) avec un filet intérieur (22) et **en ce que** le piston de refoulement (15) présente une section d'appui radialement saillante (19) avec un filet extérieur (20), qui peut être mis en prise avec le filet intérieur (22) de la zone de saisie (21) du boîtier cylindrique creux (13).

3. Injecteur selon la revendication 2, **caractérisé en ce que** le filet extérieur (20) de la section d'appui (19) est à plusieurs entrées.

4. Injecteur selon l'une quelconque des revendications 1 à 3, **caractérisé en ce que** le filet extérieur (14) du boîtier cylindrique creux (13) et/ou le filet extérieur (20) de la section d'appui (19) est/sont à trois entrées.

5. Injecteur selon l'une quelconque des revendications précédentes, **caractérisé en ce que** le filet extérieur (14) du boîtier cylindrique creux (13) et/ou le filet extérieur (20) de la section d'appui (19) présente(nt) un pas de 1,3 ou plus, de préférence de 2,5.

6. Injecteur selon l'une quelconque des revendications précédentes, **caractérisé en ce que** le boîtier cylindrique creux (13) et le piston de refoulement (15) présentent chacun une zone de saisie (18, 21) avec un diamètre extérieur en concordance.

7. Injecteur selon l'une quelconque des revendications précédentes, **caractérisé en ce que** le piston de refoulement (15) comporte un indicateur pour une course de travail prévisible du piston de refoulement (15) en vue de l'introduction de la résine, ou pour la production de la dépression.
